# FASCICULE DE BREVET EUROPEEN

(11) **EP 1 701 229 B1**
(45) Date de publication et mention de la délivrance du brevet: **21.07.2010**
(21) Numéro de dépôt: 05005113.5
(22) Date de dépôt: 09.03.2005
(51) Int. Cl.: G04G 21/02, G04B 47/06

(54) **Montre électronique ayant une fonction de boussole**
Elektronische Uhr mit Kompassfunktion
Electronic watch with compass function

(43) Date de publication de la demande: 13.09.2006
(73) Titulaire: ETA SA Manufacture Horlogère Suisse, 2540 Grenchen (CH)
(72) Inventeur: Matthey, Gérald, 1338 Ballaigues (CH)
(74) Mandataire: Ravenel, Thierry Gérard Louis

(56) Documents cités:
- CH-A- 690 697
- US-A- 5 550 794

## Description

### Arrière-plan de l'invention

La présente invention concerne une montre ayant une fonction de boussole, la montre comportant un ensemble électronique comprenant un mouvement d'horlogerie et associé à des organes manuels de commande, à un ensemble capteur magnétique, capable de mesurer la direction du champ magnétique terrestre par rapport à la montre, et à des moyens d'affichage comprenant des aiguilles centrales actionnées par des moteurs électriques pour indiquer l'heure sur un cadran dans un mode d'affichage horaire et indiquer la direction du nord dans un mode de boussole au moyen de deux desdites aiguilles, mises et maintenues dans des positions mutuellement alignées en opposition.

Une montre-bracelet de ce genre, commercialisée par Tissot SA sous la dénomination T Touch ®, fait l'objet du brevet CH 690 697 et comporte un affichage analogique à deux aiguilles, ainsi qu'un affichage numérique à cristaux liquides. La boussole comporte un ensemble capteur magnétique du type décrit dans le brevet EP 713 162, ayant un rotor aimanté radialement et deux sondes de Hall disposées dans des positions fixes. Les organes de commande de cette montre à multiples fonctions comprennent trois poussoirs latéraux et sept touches capacitives formées par des électrodes transparentes sur la face intérieure de la glace de la montre. En mode de boussole, la direction du nord est indiquée en continu au moyen des aiguilles des heures et des minutes, alignées en opposition pour former ensemble une unique aiguille assez longue pour traverser une grande partie du cadran, ressemblant ainsi à l'aiguille aimantée d'une boussole traditionnelle. Un avantage notable d'une telle montre-boussole magnétique est qu'elle indique en temps réel la direction du nord, indépendamment des mouvements que le porteur pourrait impartir à la montre au cours de l'utilisation de la boussole.

Un tel avantage n'existe pas dans les montres ou autres appareils qui calculent et affichent une direction à partir de deux mesures successives faites par un système de positionnement par satellites terrestres tel que le GPS, par exemple comme prévu dans le brevet EP 871 096. En effet, selon ce système, la direction d'un point choisi comme but est indiquée par rapport à un axe de référence de la montre, par exemple l'axe 6 h-12h du cadran, que l'utilisateur doit maintenir dans la direction de déplacement définie par les deux points de mesure précédents. Comme ce référentiel n'est pas fixe par rapport à la terre, tout mouvement de rotation de la montre avant la mesure de position du point suivant est accompagné par l'aiguille et fausse donc l'indication de la direction.

D'autre part, le brevet EP 713 162 décrit une montre à boussole magnétique qui peut indiquer, par l'une de ses deux aiguilles, un azimut géographique compris entre 0° et 360°, que l'utilisateur aura préalablement présélectionné à l'aide des moyens manuels de commande de la montre. Il est en outre prévu des moyens pour introduire la dédinaison magnétique du lieu afin de convertir les azimuts magnétiques en azimuts géographiques. L'utilisateur peut commander sa montre pour que l'aiguille indique soit le nord (azimut zéro), soit un cap présélectionné à suivre, mais pas les deux en même temps.

### Résumé de l'invention

La présente invention a pour objet une montre à boussole magnétique pouvant indiquer simultanément la direction du nord et une autre direction présélectionnée, notamment un cap à suivre, et ceci d'une manière claire et évitant le risque de confusion entre ces deux indications.

A cet effet, il est prévu une montre du genre spécifié en préambule ci-dessus, caractérisée en ce que les moyens d'affichage comportent une troisième aiguille agencée pour afficher une information horaire dans le mode d'affichage horaire, en ce que la montre comprend des moyens pour sélectionner un cap par rapport au nord par action sur les moyens manuels de commande et en ce que la montre est agencée de telle manière que dans le mode de boussole, le cap sélectionné est indiqué par la troisième aiguille, mise et maintenue dans une position angulaire correspondant au cap par rapport à la direction des deux aiguilles alignées.
De préférence, la troisième aiguille est également une aiguille centrale, plus étroite que les deux autres, comme c'est généralement le cas d'une aiguille des secondes.

De préférence, les moyens d'affichage comportent en outre un affichage numérique capable d'indiquer la valeur du cap dans le mode de boussole et une autre indication dans le mode d'affichage horaire.

Les caractéristiques de l'invention permettent au porteur de la montre d'observer simultanément et en continu la direction du nord et celle de son but, sans aucun risque de confusion entre ces directions puisque l'indication du nord par les deux aiguilles alignées en travers du cadran est parfaitement identifiable, tandis que l'indication du cap est faite par une aiguille partant du centre du cadran. En outre, l'indication de la valeur du cap sur l'affichage numérique dans le mode de boussole permet à l'utilisateur de vérifier si le cap indiqué par l'aiguille est bien celui qu'il désire.

De plus. l'utilisateur peut avantageusement poser la montre sur une carte géographique pour orienter cette carte par rapport au nord et contrôler sur la carte que le cap indiqué par la troisième aiguille correspond bien à la direction du lieu que l'utilisateur désire atteindre.

### Description sommaire des dessins

D'autres caractéristiques et avantages de la présente invention ressortiront de la description suivante, qui présente un mode de réalisation avantageux à titre d'exemple non limitatif en se référant aux dessins annexés, dans lesquels :
- la figure 1 représente schématiquement la face supérieure d'une montre-bracelet multifonctions selon l'invention, en mode d'affichage horaire, et

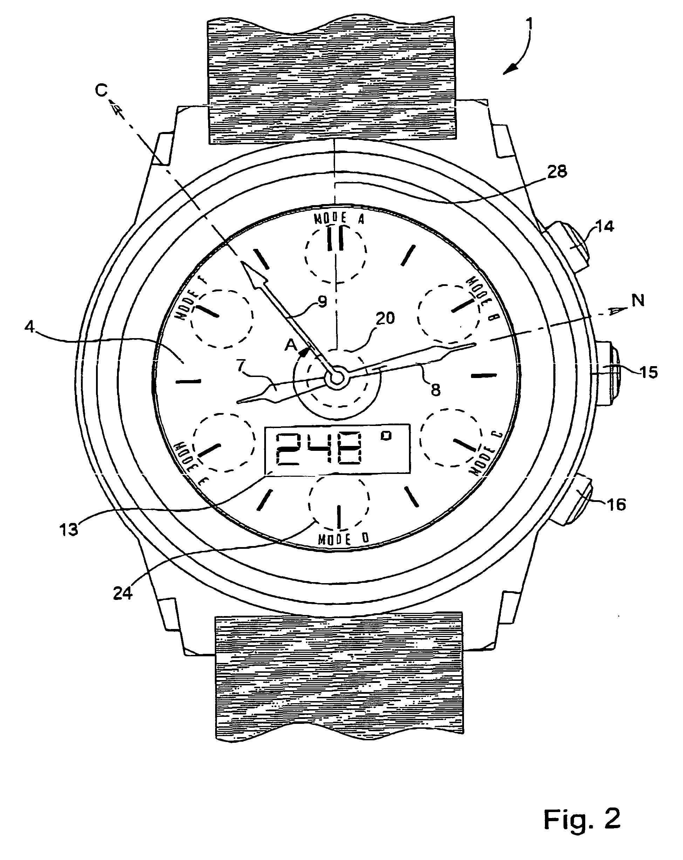

- la figure 2 représente l'affichage de la même montre en mode de boussole.

### Description détaillée d'un mode de réalisation

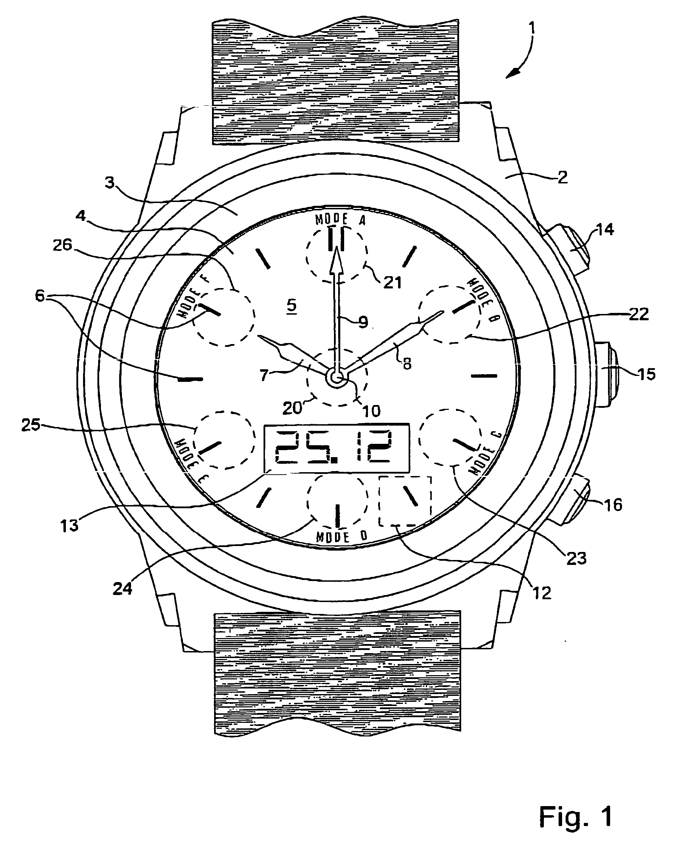

La montre-bracelet multifonctions 1 représentée dans les dessins comporte une boîte comprenant de manière classique une carrure 2 munie d'un fond, une lunette 3 et une glace 4 située au-dessus d'un cadran 5. Sur ce cadran sont appliqués douze index horaires 6 pour permettre un affichage analogique de l'heure au moyen d'aiguilles centrales comprenant ici une aiguille des heures 7, une aiguille des minutes 8 et une aiguille des secondes 9. Ces aiguilles tournent autour du centre 10 du cadran sous l'action de moteurs électriques pas à pas, capables d'entraîner individuellement chaque aiguille dans les deux sens de rotation. La montre comporte en outre un affichage numérique 13, par exemple sous la forme d'un affichage à cristaux liquides (LCD) placé dans une fenêtre du cadran 5. Dans la figure 1 est représenté schématiquement l'ensemble capteur magnétique 12, qui est logé dans la boîte de la montre et peut être du type décrit dans le brevet EP 713 162.

Pour sélectionner et commander les différentes fonctions de la montre 1, il est prévu d'une part trois poussoirs 14, 15 et 16 à contacts électriques, montés dans la carrure 2 de la boîte, et d'autre part sept touches de commande 20 à 26 disposées en regard du cadran 5 et servant de touches de sélection de mode. Dans le cas présent, comme dans la montre T Touch mentionnée plus haut, les touches 20 à 26 sont des touches capacitives formées par des électrodes transparentes appliquées sous la glace 4 et raccordées dans la montre à un circuit électronique de détection au moyen d'un réseau de pistes conductrices transparentes allant jusqu'à la périphérie de la glace. Le lecteur pourra trouver une description d'un tel dispositif de commande à touches capacitives dans le brevet EP 674 247. Les touches 21 à 26 servent à commander six modes différents A à F du fonctionnement de la montre, qui sont idenüfiés par des inscriptions correspondantes sur le cadran. La touche centrale 20 commande le mode d'affichage horaire. Certains des modes peuvent comprendre plusieurs modes secondaires, sélectionnés et commandés par différentes séquences d'action sur les touches capacitives et les poussoirs. Les résultats des fonctions ainsi commandées peuvent être représentés par l'affichage numérique 13 et/ou par une ou plusieurs des aiguilles 7 à 9 de l'affichage analogique. La montre peut en outre fournir des signaux acoustiques dans certaines circonstances.

Comme on le voit dans la figure 1, dans le mode d'affichage horaire, les aiguilles 7 à 9 indiquent comme d'habitude l'heure, la minute et la seconde, tandis que l'affichage numérique 13 peut fournir une autre indication, par exemple une indication non horaire telle que la date comme c'est le cas dans cette figure, mais aussi une indication horaire, par exemple l'heure d'un second fuseau horaire.

Le mode boussole correspond par exemple au mode D mentionné dans les dessins, que l'utilisateur enclenche en posant son doigt sur la touche capacitive 24 après avoir activé le circuit de détection des touches capacitives par une pression sur le poussoir central 15.

La boussole de la montre 1 peut être construite et fonctionner comme la boussole de la montre T Touch mentionnée plus haut. En particulier, le rotor aimanté radialement de l'ensemble capteur 12 s'oriente en permanence parallèlement à la direction nord-sud du champ magnétique terrestre et sert donc d'amplificateur du champ magnétique. Quand la montre est mise en mode boussole, les deux sondes de Hall disposées perpendiculairement l'une à l'autre fournissent des signaux que les circuits électroniques associés traitent pour délivrer un signal représentant l'orientation angulaire de l'axe magnétique du rotor par rapport à un axe de référence fixe dans la montre. De préférence, les circuits électroniques appliquent à ce signal une correction correspondant à la déclinaison magnétique du lieu, préalablement introduite par l'utilisateur, pour qu'il représente la direction du nord géographique au lieu de celle du nord magnétique. Les moteurs électriques actionnant les aiguilles 7 et 8 sont commandés en fonction de ce signal de façon que l'aiguille des minutes 8 forme le même angle que le rotor (sous réserve de la correction éventuelle) avec l'axe de référence 28 et pointe donc dans la direction N du nord, et de façon que l'aiguille des heures 7 pointe dans la direction diamétralement opposée, cette opération étant répétée plusieurs fois par seconde afin de maintenir les aiguilles en temps réel dans la position correcte par rapport à la terre, même si l'utilisateur fait bouger sa montre. Comme on l'a dit précédemment, les deux aiguilles 7 et 8 alignées paraissent former une longue aiguille qui s'étend à travers une grande partie du cadran et qui simule ainsi l'aiguille aimantée d'une boussole traditionnelle.

En même temps, les circuits électroniques de la montre commandent le moteur actionnant l'aiguille des secondes 9 de façon à la placer et la maintenir dans une position où elle forme un angle constant présélectionné A avec l'aiguille des minutes 8 indiquant le nord. Par conséquent, cette troisième aiguille 9 indique en temps réel la direction C d'un cap que l'utilisateur devrait suivre pour atteindre un point qu'il a choisi, ce cap étant un azimut géographique égal à l'angle A. En même temps, la valeur numérique du cap, ici 248°, est indiquée par l'affichage numérique 13. Bien entendu, puisque l'angle A est maintenu constant, les trois aiguilles 7, 8 et 9 pivotent ensemble en bloc par rapport à la boîte si l'on fait pivoter celle-ci dans son plan. L'indication du cap par l'aiguille 9 se distingue clairement de l'indication du nord par le fait que l'aiguille 9 part du centre du cadran, alors que le nord est indiqué par les aiguilles alignées simulant l'aiguille d'une boussole traditionnelle. L'aiguille 9 se distingue aussi des deux autres parce qu'elle est plus étroite. En outre, elle peut porter un signe particulier tel que la pointe en forme de flèche représentée dans les dessins.

L'utilisateur peut présélectionner le cap de la manière suivante. La montre doit d'abord être mise dans le mode boussole comme expliqué plus haut. L'utilisateur incrémente la valeur du cap par pression sur le poussoir 14, ou la décrémente par pression sur le poussoir 16, la valeur courante étant indiquée par l'affichage numérique 13. On peut prévoir que l'aiguille des secondes 9 reste immobile pendant ces opérations, mais on peut aussi prévoir que sa position soit ajustée en temps réel à l'indication numérique, ce qui permet de sélectionner le cap pendant que la montre est posée sur une carte géographique, de sorte que l'utilisateur voit directement sur la carte quels sont les points correspondant à ce cap. Une fois que le cap désiré est affiché, l'utilisateur valide cette valeur par une pression sur le poussoir 15, la valeur est mémorisée dans les circuits électroniques et la montre fonctionne normalement en mode boussole. De préférence, la montre revient automatiquement au mode horaire après une durée prédéterminée en mode boussole. afin de limiter la consommation d'énergie. Pour le reste, la montre 1 peut fonctionner comme la montre T Touch mentionnée plus haut.

Un homme du métier comprendra que les fonctions d'affichage en mode boussole qui sont décrites ci-dessus peuvent être obtenues avec des éléments constructifs différents. En particulier, à la place de l'ensemble capteur magnétique à rotor aimanté, on peut utiliser un ensemble capteur magnétique statique ("solid state"). En outre, les organes de commande de la montre peuvent différer de ce qui est décrit ici, par exemple comporter une tige de commande rotative coopérant avec des interrupteurs électriques ou des capteurs magnétiques ou capacitifs.

## Revendications

1. Montre ayant une fonction de boussole, la montre (1) comportant un ensemble électronique comprenant un mouvement d'horlogerie et associé à des organes manuels de commande, à un ensemble capteur magnétique (12), capable de mesurer ia direction du champ magnétique terrestre par rapport à la montre, et à des moyens d'affichage comprenant des aiguilles centrales (7 à 9) actionnées par des moteurs électriques pour indiquer l'heure sur un cadran dans un mode d'affichage horaire et indiquer la direction du nord (N) dans un mode de boussole au moyen de deux (7 et 8) desdites aiguilles, mises et maintenues dans des positions mutuellement alignées en opposition,
la montre étant **caractérisée en ce que** les moyens d'affichage comportent une troisième aiguille (9) agencée pour afficher une information horaire dans le mode d'affichage horaire, **en ce que** la montre comprend des moyens pour sélectionner un cap (C) par rapport au nord par action sur les moyens manuels de commande (14, 15, 16, 20 à 26) et **en ce que** la montre est agencée de telle manière que, dans le mode de boussole, ledit cap (C) est indique par la troisième aiguille (9), mise et maintenue dans une position angulaire correspondant au cap par rapport à la direction des deux aiguilles alignées (7 et 8).

2. Montre selon la revendication 1, **caractérisée en ce que** la troisième aiguille (9) est une aiguille centrale.

3. Montre selon la revendication 2, **caractérisée en ce que** la troisième aiguille (9) est plus étroite que les deux autres.

4. Montre selon l'une des revendications précédentes, **caractérisée en ce que** les moyens d'affichage comportent en outre un affichage numérique (13) capable d'indiquer la valeur du cap dans le mode de boussole et une autre indication dans le mode d'affichage horaire.

5. Montre selon la revendication 4, **caractérisée en ce que** dans un mode de sélection du cap, l'affichage numérique (13) indique des valeurs successives du cap en réponse aux actions sur les moyens manuels de commande (14, 16).

6. Montre selon l'une des revendications précédentes, **caractérisée en ce que** les organes manuels de commande comportent des touches de sélection de mode (20 à 26), disposées en regard du cadran de la montre.

7. Montre selon la revendication 6, **caractérisée en ce que** les touches de sélection de mode (20 à 26) sont des touches capacitives transparentes disposées sous une glace (4) recouvrant les moyens d'affichage.

8. Montre selon la revendication 6 ou 7, **caractérisée en ce que** les organes manuels de commande comportent trois contacts à poussoirs (14 à 16) ayant respectivement pour fonction, dans le mode de boussole, d'incrémenter, de décrémenter et de valider la valeur du cap sélectionné.

## Claims

1. Watch having a compass function, the watch (1) including an electronic assembly including a watch movement and associated with manual control members, with a magnetic sensor assembly (12), capable of measuring the direction of the terrestrial magnetic field in relation to the watch, and with display means including central hands (7 to 9) activated by electric motors for indicating the time on a dial in a time display mode and indicating the direction of north (N) in a compass mode by means of a two (7 and 8) of said hands, set and maintained in mutually opposite aligned positions,
the watch being **characterized in that** the display means include a third hand (9) arranged for displaying time information in the time display mode, **in that** the watch includes means for selecting a heading (C) in relation to north via action on manual control means (14, 15, 16, 20 to 26) and **in that** the watch is arranged so that, in the compass mode, said heading (C) is indicated by the third hand (9), set and maintained in an angular position corresponding to the heading in relation to the direction of the two aligned hands (7 and 8).

2. Watch according to claim 1, **characterized in that** the third hand (9) is a central hand.

3. Watch according to claim 2, **characterized in that** the third hand (9) is narrower than the other two.

4. Watch according to any of the preceding claims, **characterized in that** the display means further includes a digital display (13) capable of indicating the value of the heading in the compass mode and another indication in the time display mode.

5. Watch according to claim 4, **characterized in that** in a heading selection mode, the digital display (13) indicates the successive values of the heading in response to actions on the manual control means (14, 16).

6. Watch according to any of the preceding claims, **characterized in that** the manual control members include mode selection keys (20 to 26), arranged opposite the watch dial.

7. Watch according to claim 6, **characterized in that** the mode selection keys (20 to 26) are transparent capacitive keys arranged under a crystal (4) covering the display means.

8. Watch according to claims 6 or 7, **characterized in that** the manual control members include three push-button contacts (14 to 16) respectively having the function, in the compass mode, of incrementing, decrementing and validating the selected heading value.

## Patentansprüche

1. Uhr mit einer Kompassfunktion, welche Uhr (1) eine elektronische Einheit aufweist, die ein Uhrwerk umfasst und manuellen Steuerorganen, einer Magnetsensoreinheit (12), die fähig ist, die Richtung des magnetischen Feldes der Erde im Vergleich zur Uhr zu messen, und Anzeigemitteln zugeordnet ist, die Zeiger (7 bis 9) aus der Mitte umfassen, die von Elektromotoren angetrieben werden, um in einem Zeitanzeigemodus auf einem Zifferblatt die Zeit anzuzeigen und um in einem Kompassmodus über zwei (7 und 8) von diesen Zeigern, die in gegenüberliegende und aufeinander ausgerichtete Positionen gesetzt und in diesen Positionen gehalten werden, die Richtung des Nordens (N) anzuzeigen,
wobei die Uhr **dadurch gekennzeichnet ist, dass** die Anzeigemittel einen dritten Zeiger (9) umfassen, der vorgesehen ist, um in einem Zeitanzeigemodus eine Zeitinformation anzuzeigen, dass die Uhr Mittel umfasst, um durch Betätigung der manuellen Steuermittel (14, 15, 16, 20 bis 26) einen Kurs (C) verglichen mit dem Norden zu wählen, und dass die Uhr derart beschaffen ist, dass der Kurs (C) im Kompassmodus durch den dritten Zeiger (9) angezeigt wird, der in eine Winkelposition, die dem Kurs verglichen mit der Richtung der beiden aufeinander ausgerichteten Zeiger (7 und 8) entspricht, gesetzt und in dieser Position gehalten wird.

2. Uhr nach Anspruch 1, **dadurch gekennzeichnet, dass** der dritte Zeiger (9) ein Zeiger aus der Mitte ist.

3. Uhr nach Anspruch 2, **dadurch gekennzeichnet, dass** der dritte Zeiger (9) schmaler ist als die beiden anderen.

4. Uhr nach einem der vorhergehenden Ansprüche, **dadurch gekennzeichnet, dass** die Anzeigemittel zudem eine Digitalanzeige (13) umfassen, die fähig ist, im Kompassmodus den Wert des Kurses und im Zeitanzeigemodus eine andere Angabe anzuzeigen.

5. Uhr nach Anspruch 4, **dadurch gekennzeichnet, dass** die Digitalanzeige (13) in einem Kurswahlmodus in Ansprechen auf die Betätigungen der manuellen Steuermittel (14, 16) aufeinanderfolgende Werte des Kurses anzeigt.

6. Uhr nach einem der vorhergehenden Ansprüche, **dadurch gekennzeichnet, dass** die manuellen Steuerorgane Moduswahltasten (20 bis 26) umfassen, die gegenüber dem Zifferblatt der Uhr angeordnet sind.

7. Uhr nach Anspruch 6, **dadurch gekennzeichnet, dass** die Moduswahltasten (20 bis 26) transparente kapazitive Tasten sind, die unter einem die Anzeigemittel überdeckenden Glas (4) angeordnet sind.

8. Uhr nach Anspruch 6 oder 7, **dadurch gekennzeichnet, dass** die manuellen Steuerorgane drei Drücker-Kontakte (14 bis 1B) umfassen, deren Aufgabe es ist, im Kompassmodus den Wert des gewählten Kurses zu inkrementieren, zu dekrementieren bzw. zu bestätigen.
